# EUROPÄISCHE PATENTANMELDUNG

(11) **EP 4 667 797 A1**
(43) Veröffentlichungstag der Anmeldung: **24.12.2025**
(21) Anmeldenummer: 25196821.0
(22) Anmeldetag: 28.06.2019
(51) Int. Cl.: F16L 9/04, B32B 1/08, B32B 5/12, B32B 5/26, B32B 5/28, B32B 15/085, B32B 15/095, B32B 15/18, B32B 27/12, B32B 27/32, B32B 27/40

(54) **UMMANTELTES ROHR UND ROHRVERBUND**

(30) Priorität: 29.06.2018 DE 102018115846
(62) Teilanmeldung aus: 19736334.4
(71) Anmelder: TDC International AG, 6004 Luzern (CH)
(72) Erfinder: Welker, Daniel, 6004 LUZERN (CH)
(74) Vertreter: Eisenführ Speiser

(57) **Zusammenfassung**

Die Erfindung betrifft ein Rohr (100) mit einer Thermoplastmantelfläche (150) und einer die Thermoplastmantelfläche (150) umschließenden, glasfaserverstärkten Duroplastummantelung (180) gelöst. Die Duroplastummantelung (180) ist von mehren Lagen Glasfasermatte oder Glasfasergewebe oder einer Kombination aus beiden gebildet, wobei die Lagen im Naß-in-naß-Verfahren unter Verwendung eines Vinylester-, Polyester- oder Epoxydharzes auf die Thermoplastmantelfläche (150) aufgebracht sind. Erfindungsgemäß ist dabei eine Außenlage (186) der Duroplastummantelung (180) von kreuzgewickelten Glasfaservlies oder Glasfasergewebe gebildet.

## Beschreibung

Die Erfindung betrifft zum einen ein Metallrohr mit einer Thermoplastmantelfläche und einer die Thermoplastmantelfläche umschließenden faserverstärkten Duroplastummantelung. Ein weiterer Aspekt ist ein Rohrverbund aus mehreren Rohren mit Thermoplastmantelfläche.

Es ist bekannt, erdverlegte Stahlrohre zum Transport von flüssigen oder gasförmigen Medien mit einer relativ dünnen Ummantelung aus Kunststoff, bevorzugt aus Polypropylen Polyethylen, Fusion-bonded epoxy (FBE) oder Polyurethan, zu versehen, um beispielsweise eine Korrosion des metallischen Rohrmaterials zu verhindern. Derartige Schichten aus Polypropylen, Polyethylen oder Polyurethan sichern einerseits einen ausgezeichneten Korrosionsschutz, da die Erdfeuchte mit dem metallischen Rohrmaterial nicht in Kontakt gelangen kann. Sie weisen aber andererseits in nachteiliger Weise nur eine relativ geringe mechanische Festigkeit auf. Zum Schutz vor einem unerwünschten mechanischen Abrieb der Polypropylen-, Polyethylen- oder Polyurethan-Ummantelung ist es bekannt, das Rohr zusätzlich mit einer Faserzementhülle zu versehen. Die mechanische Schutzwirkung des Faserzementes ist jedoch relativ gering, da der Faserzement selbst nur eine geringe Eigenfestigkeit aufweist und darüber hinaus wegen des geringen Adhäsionsvermögens von Polypropylen, Polyethylen, FBE oder Polyurethan auch schlecht auf der Kunststoffschicht haftet.

Aus diesem Grunde kommt es häufig bei den im wesentlichen grabenlosen Rohrverlegeverfahren, beispielsweise beim Horizontaldrilling, während des Rohrvortriebs unter Verwendung eines sogenannten Dükers zu mechanischen Beschädigungen der dünnen und relativ weichen Polypropylen-, Polyethylen- oder Polyurethanschicht, so dass der Korrosionsschutz für das metallische Rohrmaterial lokal aufgehoben oder zumindest in unvertretbar hohem Maße eingeschränkt wird.

Aufgabe der Erfindung ist es, bekannte Verfahren sowohl in der offenen als auch in der grabenlosen Bauweise zur Umhüllung von Rohren und Rohrverbindungen zu verbessern.

Erfindungsgemäß wird diese Aufgabe durch ein Metallrohr mit einer Thermoplastmantelfläche und einer die Thermoplastmantelfläche umschließenden, glasfaserverstärkten Duroplastummantelung gelöst. Die Duroplastummantelung ist von mehreren Lagen glasfaserverstärktem Kunststoff (GfK) gebildet, wobei die Lagen aus glasfaserverstärktem Kunststoff Glasfasern in Form von Rovings, UD-Gewebe, UD-Gelege, Glasfasermatte oder Glasfasergewebe oder einer Kombination aus diesen gebildet sind und die Lagen im Naß-in-Naß-Verfahren unter Verwendung eines Vinylester-, Polyester- oder Epoxydharzes auf die Thermoplastmantelfläche aufgebracht sind. Erfindungsgemäß wird dabei wenigstens eine Lage der Duroplastummantelung von kreuzgewickelten Textilglasrovings oder Glasfasermatten oder Glasfasergeweben oder einer Kombination dieser Gläser gebildet. Kreuzgewickelt bedeutet, dass die Glasfasern durch Wickeln auf das Rohr aufgebracht werden, wobei die eine (Glas-) Lage mit einem ersten Wicklungssinn und eine zweite (Glas-) Lage mit einem diesem Wicklungssinn entgegengesetzten Wicklungssinn aufgebracht werden, wobei sich die beiden Glaslagen nicht überkreuzen.

Vorzugsweise ist wenigstens die am weitesten außenliegende Lage der Duroplastummantelung - hier Außenlage genannt - kreuzgewickelt. Eine derartige Außenlage bietet den Vorteil, dass das mit der Duroplastummantelung versehene Rohr in beliebiger Richtung vorgetrieben werden kann. Bei bekannten Rohren gibt es typischerweise eine Richtung, bei der eine größere Gefahr besteht, dass die Duroplastummantelung Schaden nimmt, als bei der entgegengesetzten Richtung.

Vorzugsweise sind die auf das Rohr gewickelten Glasfasern in Form von Rovings, insbesondere Wickelrovings, UD-Gewebe oder UD-Gelege vorgesehen. UD-Gewebe sind Glasfasergewebe, die im Wesentlichen von unidirektional (UD) angeordneten Glaserfaserrovings gebildet sind, die nur vergleichsweise wenige quer zu den Rovings verlaufende Fasern aufweisen. UD-Gelege sind von unidirektional (UD) angeordneten Glaserfaserrovings gebildet, die durch quer zu den Rovings verlaufenden Haltefäden zusammengehalten sind.

Die Thermoplastmantelfläche ist vorzugsweise direkt auf das Metallrohr aufgebracht. Das Metallrohr ist vorzugsweise ein Stahlrohr. Alternativ kann jedoch auch das Rohr selbst ein Kunststoffrohr sein, dessen Wandung von einem Thermoplast gebildet ist.

Weiterhin ist es bevorzugt, wenn die Duroplastummantelung an den Längsenden des Rohres auf einer Länge von ca. 100 mm maximal einem halben Meter eine annähernd stetig abnehmende Dicke hat, wobei die Duroplastummantelung in ihrem Bereich abnehmender Dicke auf ihrer Außenseite mit einem Abreißgewebe versehen ist. Diese Maßnahme trägt dazu bei, dass die Längsenden der Rohre vor dem Auftrag der bauseitigen Duroplastummantelung nicht angeschliffen werden müssen.

Weiterhin ist es bevorzugt, wenn die von Glasfasermatten oder Glasfasergewebe gebildeten Lagen der faserverstärkten Duroplastummantelung - mit der Ausnahme der Außenlacke - von Glasfaserbahnen gebildet sind, die derart um das Rohr gewickelt sind, dass sich die Ränder einer jeweiligen Glasfaserbahn um 2 bis 5 cm überlappen. Dies führt dazu, dass jede Lage der Duroplastummantelung lückenlos aufgebaut und in sich geschlossen ist.

Gemäß einer besonders bevorzugten Ausführungsvariante besitzt die Duroplastummantelung eine innere Lage oder zwei innere Lagen, die jeweils von einer Glasfasermatte oder Glasfasergewebe mit einer Grammatur zwischen 300 und 500 g/m2, vorzugsweise von etwa 450 g/m2 gebildet sind. Als innere Lage oder innere Lagen sind hierbei jene Lagen der Duroplastummantelung bezeichnet, die der Thermoplastmantelfläche am nächsten gelegen sind.

Besonders bevorzugt wechseln Lagen aus Wickelrovings und axialen Glasfasern, insbesondere UD-Gewebe oder UD-Gelege ab, d.h. es werden Lagen aus Wickelrovings und axialen Glasfasern im Wechsel aufgebracht. Die erforderlichen Materialanteile von Reaktionsharz in Bezug auf Glasfasern können in Abhängigkeit der Anforderungen variieren. Vorzugsweise werden etwa 600 g/m² Wickelroving als Verstärkung in radialer Richtung, sowie etwa 400 g/m² in axialer Rohrrichtung im Wechsel verarbeitet. Auch der Einsatz von geschnittenen Glasfasern (Schnittroving) oder festen Füllstoffen wie Quarzsand zwischen den einzelnen Glaslagen ist möglich. Dies reduziert die Rohstoffkosten und beeinträchtigt die mechanischen Eigenschaften kaum.

Gemäß einer weiteren vorteilhaften Ausführungsvariante sind mehrere einzelne lokal begrenzte Duroplastummantelungen in Form von Spanten oder Gleitkufen vorgeshen, die beim Einbau des Rohres als Abstandshalter zu einem Hüllrohr dienen und somit einen Schutz der Thermoplastmantelfläche gegen mechanische Belastungen bieten.

Weiterhin bevorzugt sind auch Kombinationen aus einer sich über die Länge eines Rohres erstreckenden Duroplastummantelung und kürzeren Spanten oder Gleitkufen.

Die innere Lage oder die inneren Lagen sind dabei vorzugsweise von gewickelten Glasfaserbahnen gebildet, die eine Breite von weniger als 35 cm haben. Wenn die Breite der Glasfaserbahn beispielsweise 30 cm beträgt und diese mit einem Überlapp von 3 cm um das Rohr gewickelt werden, hat die resultierende Wicklung im Ergebnis eine Steigung von 27 cm.

Weiterhin ist es bevorzugt, wenn die Duroplastummantelung wenigstens eine mittlere Lage oder zwei mittlere Lagen aufweist, die jeweils von einer Glasfasermatte oder Glasfasergewebe mit einer Grammatur (Flächengewicht) zwischen 800 g/m² und 1200 g/m² gebildet sind, und zwar vorzugsweise mit einer Grammatur von etwa 1000 g/m², z.B. 1030 g/m². Die mittlere Lage oder die mittleren Lagen der Duroplastummantelung befinden sich in radialer Richtung des Rohres zwischen der wenigstens einen inneren Lage und der Außenlage.

Die wenigstens eine mittlere Lage der Duroplastummantelung ist vorzugsweise von einer gewickelten Glasfaserbahn mit einer Breite von maximal 40 cm gebildet. Bei einem Überlapp von etwa 5 cm ergibt dies eine Steigung von 35 cm pro Wicklung.

Die Thermoplastmantelfläche des Rohres ist vorzugsweise von Polyethylen, Polypropylen, Fusion-Bonded Epoxy (FBE) oder Polyurethan gebildet, wobei Polyethylen der am meisten bevorzugte Werkstoff ist.

Weiterhin ist es bevorzugt, dass die einzelnen Laminatlagen auch aus endlosem radialen Wickelroving sowie einem unidirektionalem Textilglasgewebe im Wechsel aufgebaut sind.

Das Rohr hat vorzugsweise einen Nenndurchmesser zwischen 100 und 2.500 mm und die Dicke der Duroplastummantelung beträgt vorzugsweise zwischen 3 und 8 mm, besonders bevorzugt etwa 5 mm.

Ein weiterer Erfindungsaspekt ist ein Rohrverbund der von mehreren Rohren der vorgenannten Art gebildet ist und bei dem beispielsweise 2 bis 6 Rohre parallel zueinander mit Manschetten aus glasfaserverstärktem Kunststoff miteinander verbunden sind. Der Vorteil eines derartigen Rohrverbunds ist, dass gleich mehrere Rohre gleichzeitig verlegt bzw. vorgetrieben werden können, wobei die Manschetten aus glasfaserverstärktem Kunststoff innig mit der Duroplastummantelung der Rohre verbunden sind, so dass der Rohrverbund stabil ist.

Die erforderliche Manschettenbreite sowie der Manschettenabstand in Längsrichtung richten sich dabei nach den projektbezogenen statischen Berechnungen.

Vorzugweise sind die Manschetten etwa in einem Abstand von 2 bis 4 m in Längsrichtung des Rohrverbunds voneinander beabstandet. Die Breite einer jeweilige Manschette beträgt vorzugsweise zwischen 20 und 50 cm, beispielsweise etwa 40 cm.

Ein Rohrverbund ist vorzugsweise von 2 bis 5 und besonders bevorzugt von 3 bis 4 Rohren gebildet.

Die Mittellinien der Rohre haben im Bereich der Manschetten vorzugsweise einen Abstand voneinander, der größer ist als der Außendurchmesser der Rohre. Dies bedeutet, dass die Rohre des Rohrverbunds seitlich nicht unmittelbar aneinander anliegen, sondern dass die Rohre des Rohrverbunds vielmehr einen seitlichen Abstand voneinander haben. Dies erleichtert es, den Rohrverbund auch entlang einer leicht gebogenen Strecke zu verlegen.

Die aus glasfaserverstärktem Kunststoff bestehenden Manschetten sind vorzugsweise adhäsiv mit den Rohren verbunden. Im diesem Zusammenhang ist es besonders vorteilhaft, wenn die Manschetten eine Harzmatrix aus dem gleichen Duroplast besitzen, wie die Duroplastummantelung der Rohre, beispielsweise aus Vinylester-, Polyester- oder Epoxidharz.

Ein weiterer Erfindungsaspekt betrifft Rohrverbindungen, die vor Ort, also beim Verlegen der Rohre vorgenommen werden und die nach Herstellung der Schweißnaht ebenfalls beschichtet werden müssen. Als Korrosionsschutzschicht ist es bevorzugt, eine Polyurethanschicht vollflächig über den gesamten Schweißnahtbereich bis über die werkseitig hergestellte Korrosionsschutzschicht hinweg aufzusprühen. Nach Aushärtung dieser Schicht wird die Oberfläche aufgeraut, vorzugsweise mittels Sandstrahlung, und eine glasfaserverstärkte Duroplastummantelung aufgetragen. Diese Duroplastummantelung ist von mehreren Lagen Glasfasermatte oder Glasfasergewebe oder einer Kombination aus beiden gebildet, wobei die Lagen im Naß-in-Naß-Verfahren unter Verwendung eines Vinylester-, Polyester- oder Epoxydharzes auf die Polyurethanmantelfläche aufgebracht werden. Die Dicke dieser bauseitigen Duroplastummantelung beträgt vorzugsweise zwischen 3 und 8 mm, besonders bevorzugt etwa 5 mm.

Weitere Merkmale und Eigenschaften sowie Varianten erfindungsgemäßer Rohre und erfindungsgemäßer Rohrverbände sind der nachfolgenden Beschreibung von Ausführungsbeispielen zu entnehmen. Anhand der nachfolgenden Ausführungsbeispiele wird somit die Erfindung näher erläutert. Von den die Ausführungsbeispiele illustrierenden Figuren zeigen die einzelnen Figuren folgendes:
- Fig. 1:: ist ein ausschnittsweiser Längsschnitt durch ein Rohr mit einer Thermoplastmantelfläche und einer diese umschließenden faserverstärkten Duroplastummantelung;
- Fig. 2:: zeigt beispielhaft einen Querschnitt durch ein erfindungsgemäß ummanteltes Rohr; und
- Fig. 3:: zeigt ein Längsende eines Rohres mit einer Duroplastummantelung mit zum Längsende hin abnehmender Dicke;
- Fig. 4:: zeigt einen Rohrverbund aus drei Rohren, die mittels Manschetten miteinander verbunden sind, in einer teilweise geschnittenen Stirnansicht;
- Fig. 5:: zeigt den Rohrverbund aus Figur 4 in einer Seitenansicht; und
- Fig. 6:: zeigt einen Längsschnitt durch einen Rohrabschnitt mit einem Rohr mit einer Thermoplastmantelfläche und einer die Thermoplastmantelfläche umschießenden faserverstärkten Duroplastummantelung sowie hierauf aufgebrachten Gleitkufe als Abstandshalter zu einem Hüllrohr.

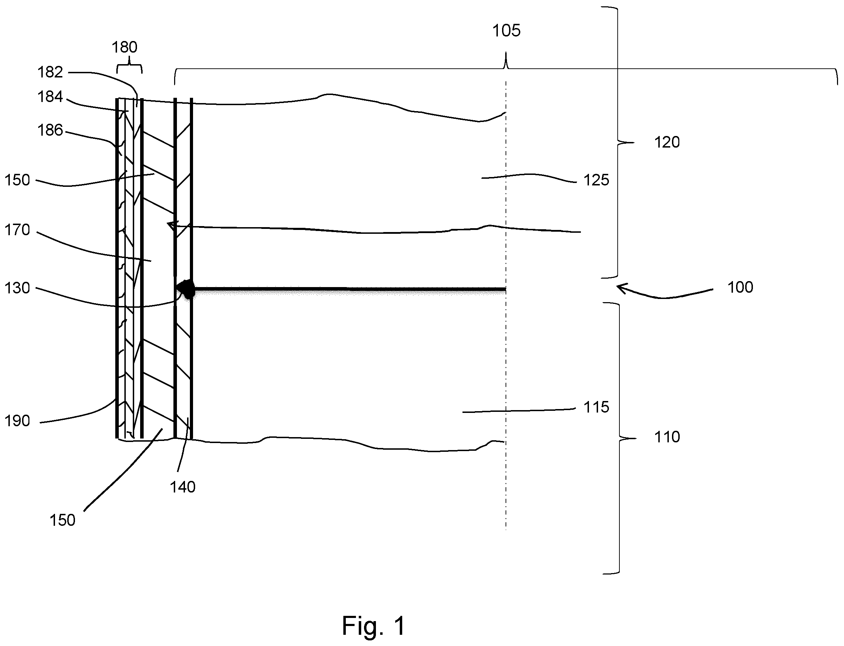

Fig. 1 ist ein ausschnittsweiser Längsschnitt durch ein Rohr 100, das von einem Ausgangsrohr 105 beispielsweise aus Metall, einer darauf aufgebrachten Thermoplastmantelfläche 150 und einer die Thermoplastmantelfläche 150 umschießenden faserverstärkten Duroplastummantelung 180 gebildet ist.

Das dargestellte Ausgangsrohr 105 hat einen Nenndurchmesser von 500 mm und ist aus mehreren spiralgeschweißten, durch eine Schweißnaht 130 miteinander verbundenen Rohrabschnitten 110 und 120 zusammengesetzt.

Eine Wandung 140 des Rohrs 100 besteht aus Stahl und trägt eine dem Korrosionsschutzschicht dienende Thermoplastmantelfläche 150 aus Polyethylen (PE).

Im Bereich der Schweißnaht 130 ist die Thermoplastmantelfläche 150 unterbrochen und durch eine Schrumpfmanschette oder ein Reparaturband 170 aus Polyethylen ersetzt, um die Unterbrechung der Thermoplastmantelfläche 150 zu überbrücken.

Um die Rohrabschnitte 110 und 120 miteinander verschweißen zu können, wird die Thermoplastmantelfläche 150 an den Enden 115 und 125 der Rohrabschnitte 110 und 120 vor deren Zusammenschweißen entfernt und nach dem Schweißvorgang durch die Schrumpfmanschette oder das Reparaturband 170 aus Polyethylen ersetzt.

Figur 1 ist zu entnehmen, dass die Dicke der Thermoplastmantelfläche 150 in etwa der Dicke der faserverstärkten Duroplastummantelung 180 entspricht, und etwa 5mm beträgt.

Die Duroplastummantelung 180 besitzt ein oder zwei innere Lagen 182 und ein oder zwei mittlere Lagen 184 sowie eine Außenlage 186.

Jede dieser Lagen ist von Glasfaser-verstärkten Kunststoff gebildet, und zwar von um das Rohr 100 gewickelten Textilglasfasern, die in eine Harzmatrix aus Vinylesterharz, Polyesterharz oder Epoxidharz eingebettet sind.

Die Faserbahnen, die die innere Lage 182 oder die inneren Lagen 182 bilden sowie die Faserbahnen, die die mittlere Lage 184 oder die mittleren Lagen 184 bilden sind dabei derart im das Rohr 100 gewickelt, dass sich die beiden Ränder einer jeweiligen Faserbahn um etwa zwei bis fünf Zentimeter überlappen.

Die innere Lage 182 oder die inneren Lagen 182 sind im Ausführungsbeispiel von einer Glaserfasermatte mit einer Grammatur von etwa 450 g/m2 gebildet, während die mittlere Lage 184 oder die mittleren Lagen 184 von einer Glaserfasermatte mit einer Grammatur von etwa 1030 g/m2 gebildet sind.

Die Außenlage 186 ist im Unterschied zu der inneren Lage 182 oder den inneren Lagen 182 und der mittleren Lage 184 oder den mittleren Lagen 184 nicht mit einen für jede Lage einheitlichen Wicklungssinn aufgebracht, sondern kreuzgewickelt, das heißt, die Außenlage ist von zwei Faserbahnen gebildet, die mit gegensinnigen Wicklungssinn gewickelt sind und sich überkreuzen, so dass sie im Ergebnis ineinander verwoben sind.

Alle Lagen 182, 184 und 186 sind nass-in-nass auf Thermoplastmantelfläche 150 aufgebracht, das heißt eine jeweils folgende Lage wird auf die vorangehende Lage aufgebracht, bevor das die Harzmatrix bildende Harz der vorangehenden Lage ausgehärtet ist. Auf diese Weise sind die Lagen 182, 184 und 186 innig miteinander verbunden.

Der Glasanteil der Duroplastummantelung 180 beträgt mindestens 35 Masse Prozent, d.h. der Harzanteil ist kleiner als 65 Prozent.

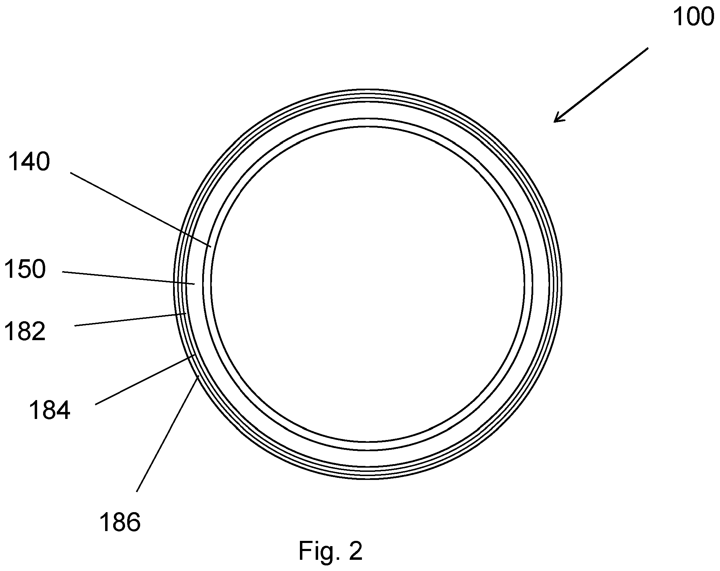

Figur 2 zeigt beispielhaft einen Querschnitt durch ein erfindungsgemäß ummanteltes Rohr 100.

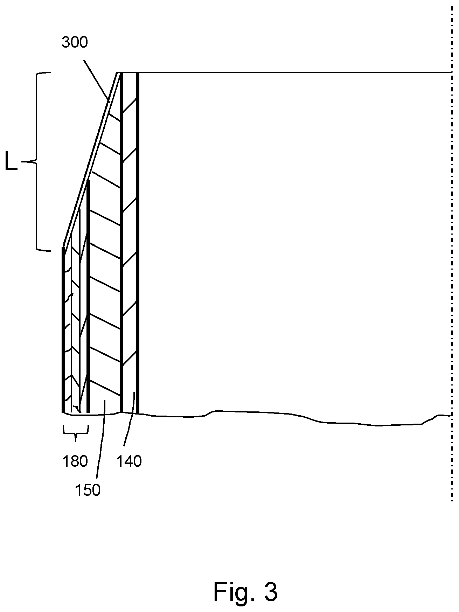

Figur 3 zeigt ein Längsende eines Rohres 100 mit einer Duroplastummantelung 180, deren Dicke auf einer Länge L zum Längsende des Rohres 100 hin abnimmt. Die Duroplastummantelung 180 ist in ihrem Bereich L abnehmender Dicke auf ihrer Außenseite mit Abreißgewebe 300 versehen. Beide Maßnahmen - die abnehmende Dicke sowie das Abreißgewebe 300 - tragen dazu bei, dass die Längsenden der Rohre 100 leicht durch Schweißen miteinander verbunden werden können und dass nach dem Verschweißen der Rohre im Bereich der Schweißnaht auf einfache Art und Weise eine Duroplastummantelung aufgebaut werden kann. Das Abreißgewebe sorgt dabei dafür, dass die ursprüngliche Duroplastummantelung im Bereich der Rohrenden nicht angeschliffen werden muss. Die abnehmende Dicke die ursprünglichen Duroplastummantelung führt dazu, dass es einen annähert stetigen Übergang von der ursprünglichen Duroplastummantelung zu der nach dem Verschweißen der Rohre im Bereich der Schweißnaht erstellen, lokalen Duroplastummantelung gibt.

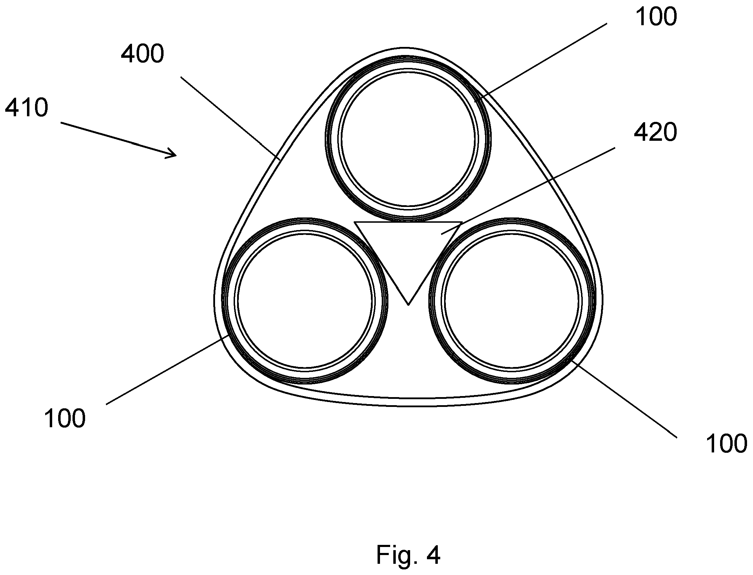

Figur 4 zeigt einen Rohrverbund aus drei Rohren 100, die mittels Manschetten 400 aus Glasfaser-verstärktem Kunststoff miteinander zu dem Rohrverbund 410 verbunden sind.

Die Rohre 100 haben im Bereich der Manschetten 400 einen Abstand voneinander, so dass sich die Rohre 100 des Rohrverbunds 410 seitlich nicht berühren und nicht unmittelbar aneinander anliegen. Dies erleichtert es, den Rohrverbund 410 auch entlang einer leicht gebogenen Strecke zu verlegen. Um diesen Abstand zu gewährleisten, sind im Bereich der Manschetten 400 Abstandshalter 420 vorgesehen, die die Rohre 100 seitlich auf Abstand halten.

Die aus glasfaserverstärktem Kunststoff bestehenden Manschetten 400 sind adhäsiv mit den Rohren verbunden. Die Harzmatrix der Manschetten ist von dem gleichen Duroplast gebildet, wie die Duroplastummantelung 180 der Rohre 100, also beispielsweise aus Vinylester- oder Polyesterharz.

Die erforderliche Manschettenbreite sowie der Manschettenabstand in Längsrichtung richten sich dabei nach den projektbezogenen statischen Berechnungen.

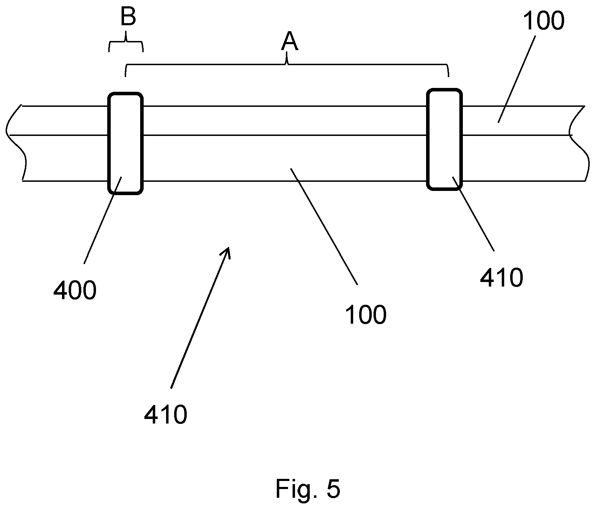

Wie Figur 5 zu entnehmen ist, sind die Manschetten 400 etwa in einem Abstand A von 2 bis 4 m in Längsrichtung des Rohrverbunds 410 voneinander beabstandet. Die Breite B einer jeweilige Manschette 400 beträgt vorzugsweise etwa 40 cm.

Anstelle von drei Rohren (wie abgebildet) kann ein Rohrverbund auch beispielsweise von zwei bis sechs Rohren gebildet sein. Der Vorteil eines derartigen Rohrverbunds ist, dass gleich mehrere Rohre 100 gleichzeitig verlegt bzw. vorgetrieben werden können, wobei die Manschetten 400 aus glasfaserverstärktem Kunststoff innig mit der Duroplastummantelung 180 der Rohre 100 verbunden sind, so dass der Rohrverbund stabil ist.

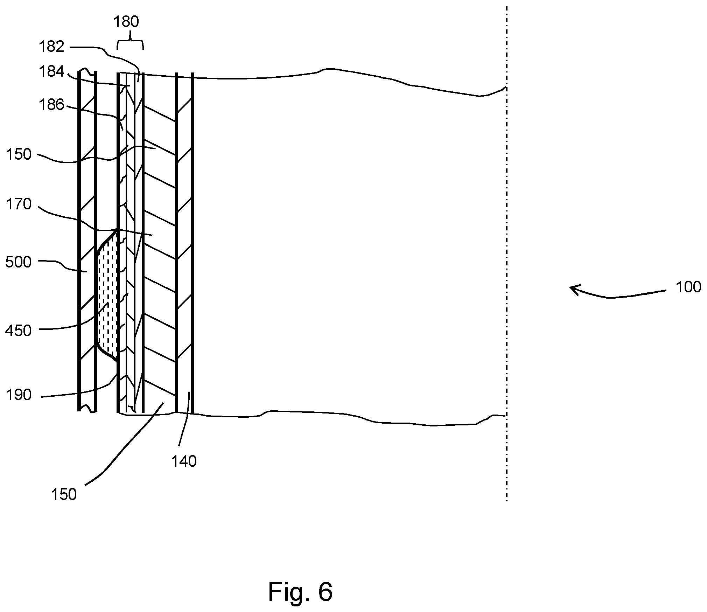

Figur 6 zeigt einen Längsschnitt durch einen Rohrabschnitt mit einen Rohr 100 mit einer Thermoplastmantelfläche 150 und einer die Thermoplastmantelfläche 150 umschießenden faserverstärkten Duroplastummantelung 180 sowie hierauf aufgebrachten Gleitkufe 450 als Abstandshalter zu einem Hüllrohr 500. Das Hüllrohr 500 dient hier als äußerer Schutz, in den das Rohr 100 mitsamt der darauf aufgebrachten Thermoplastmantelfläche 150, Duroplastummantelung 180 und Gleitkufen 450 hineingeschoben ist. Vorzugsweise sind mehrere Gleitkufen 450 mit einem Längsabstand voneinander vorgesehen.

Die Gleitkufen450 stellen ein Merkmal dar, dass unabhängig von einer Duroplastummantellung oder in Verbindung mit einer beliebigen Duroplastummantelung verwirklicht werden kann.

### Bezugszeichenliste

- 100: Rohr
- 105: Ausgangsrohr aus Metall
- 110, 120: Rohrabschnitt
- 115, 125: Längsende eines Rohrs
- 130: Schweißnaht
- 140: Wandung
- 150: Thermoplastmantelfläche
- 170: Reparaturband
- 180: Duroplastummantelung
- 182: innere Lage der Duroplastummantelung
- 184: mittlere Lage der Duroplastummantelung
- 186: Außenlage der Duroplastummantelung
- 300: Abreißgewebe
- 400: Manschette
- 410: Rohrverbund
- 420: Abstandshalter
- 450: Gleitkufe
- 500: Hüllrohr

## Patentansprüche

1. Metallrohr (100) mit einer Thermoplastmantelfläche (150) und einer die Thermoplastmantelfläche (150) umschießenden faserverstärkten Duroplastummantelung (180), die von mehreren Lagen Textilglasfasern gebildet ist, die im Naß-in-Naß-Verfahren unter Verwendung eines Vinylester-, Polyester- oder Epoxidharzes auf die Thermoplastmantelfläche (150) aufgebracht sind,
**dadurch gekennzeichnet, dass** die einzelnen Lagen der Duroplastummantelung (180) von kreuzgewickelten Textilglasfasern gebildet ist.

2. Metallrohr (100) gemäß Anspruch 1, **dadurch gekennzeichnet, dass** die Thermoplastmantelfläche (150) auf ein Stahlrohr (100) aufgebracht ist.

3. Metallrohr (100) gemäß Anspruch 1 oder 2, **dadurch gekennzeichnet, dass** die Duroplastummantelung (180) an den Längsenden des Metallrohres (100) auf einer Länge von ca. 100 mm auf ihrer Außenseite mit Abreißgewebe (300) versehen ist.

4. Metallrohr (100) gemäß mindestens einem der Ansprüche 1 bis 3, **dadurch gekennzeichnet, dass** die von Glasfasermatten oder -gewebe gebildeten Lagen der faserverstärkten Duroplastummantelung (180) mit Ausnahme der Außenlage (186) von Glaserfaserbahnen gebildet sind, die derart um das Metallrohr (100) gewickelt sind, dass sich die Ränder der jeweiligen Glasfaserbahn um zwei bis fünf Zentimeter überlappen.

5. Metallrohr (100) gemäß mindestens einem der Ansprüche 1 bis 4, **dadurch gekennzeichnet, dass** die von Glasfasermatten oder -gewebe gebildeten Lagen der faserverstärkten Duroplastummantelung (180) eine innere Lage (182) oder zwei innere Lagen (182) aufweist, die jeweils von einer Glasfasermatten oder -gewebe mit einer Grammatur zwischen 300 und 500 g/m², vorzugsweise von etwa 450 g/m² gebildet sind.

6. Metallrohr (100) gemäß Anspruch 5, **dadurch gekennzeichnet, dass** die innere Lage (182) oder die inneren Lagen (182) von gewickelten Glasfaserbahnen mit eine Breite von weniger als 35 Zentimetern gebildet sind.

7. Metallrohr (100) gemäß mindestens einem der Ansprüche 1 bis 6, **dadurch gekennzeichnet, dass** die von Glasfasermatten oder -gewebe gebildeten Lagen der faserverstärkten Duroplastummantelung (180) eine mittlere Lage (184) oder zwei mittlere Lagen (184) aufweist, die jeweils von einer Glasfasermatten oder -gewebe mit einer Grammatur zwischen 800 und 1200 g/m², vorzugsweise von etwa 1000 g/m² gebildet sind, wobei sich die mittlere Lage (184) oder die mittleren Lagen (184) zwischen in radialer Richtung des Metallrohres (100) zwischen wenigstens einer inneren Lage (182) und der Außenlage (186) der faserverstärkten Duroplastummantelung (180) befinden.

8. Metallrohr (100) gemäß Anspruch 7, **dadurch gekennzeichnet, dass** die mittlere Lage (184) oder die mittleren Lagen (184) von gewickelten Glasfaserbahnen mit eine Breite von maximal 40 Zentimetern gebildet sind.

9. Metallrohr (100) gemäß mindestens einem der Ansprüche 1 bis 8, **dadurch gekennzeichnet, dass** die Thermoplastmantelfläche (150) von Polyethylen, Polypropylen oder Polyurethan gebildet ist.

10. Metallrohr (100) gemäß mindestens einem der Ansprüche 1 bis 9, **dadurch gekennzeichnet, dass** das Metallrohr (100) einen Nenndurchmesser zwischen 100 und 2.500 Millimetern hat und dass die Dicke der Duroplastummantelung (180) zwischen zwei und acht Millimetern, vorzugsweise etwa fünf Millimeter beträgt.

11. Rohrverbund (410) mit mehreren Rohren (100) gemäß wenigstens einem der Ansprüche 1 bis 9, **dadurch gekennzeichnet, dass** Rohre (100) parallel zueinander mit Manschetten (400) aus Glasfaser-verstärktem Kunststoff miteinander verbunden sind.

12. Rohrverbund (410) gemäß Anspruch 11, **dadurch gekennzeichnet, dass** der Rohrverbund (410) von zwei bis fünf und vorzugsweise von drei bis vier Rohren (100) gebildet ist.

13. Rohrverbund (410) gemäß Anspruch 11 oder 12, **dadurch gekennzeichnet, dass** die Mittellinien der Rohre (100) im Bereich der Manschetten (400) einen Abstand voneinander haben, der größer ist, als der Außendurchmesser der Rohre (100).

14. Rohrverbund (410) gemäß wenigstens einem der Ansprüche 11 bis 13, **dadurch gekennzeichnet, dass** Manschetten (400) adhäsiv mit den Rohren (100) verbunden sind.

15. Rohrverbund (410) gemäß wenigstens einem der Ansprüche 11 bis 14, **dadurch gekennzeichnet, dass** der Glasfaser-verstärkte Kunststoff der Manschetten (400) eine Harzmatrix aus dem gleichen Duroplast besitzt, wie die Duroplastummantelung (180) der Rohre (100).
